# EUROPÄISCHE PATENTSCHRIFT

(11) **EP 0 762 699 B1**
(45) Veröffentlichungstag und Bekanntmachung des Hinweises auf die Patenterteilung: **26.05.2010**
(21) Anmeldenummer: 96109113.9
(22) Anmeldetag: 07.06.1996
(51) Int. Cl.: H04L 27/233

(54) **Verfahren zur Auflösung der Phasenvieldeutigkeit bei trelliscodierter Modulation**
Method for phase ambiguity resolution in a trellis coded modulation system
Procédé pour lever l'ambiguité de phase dans un système de modulation codée en treillis

(30) Priorität: 16.08.1995 DE 19530063
(43) Veröffentlichungstag der Anmeldung: 12.03.1997
(73) Patentinhaber: Ericsson AB, 164 80 Stockholm (SE)
(72) Erfinder: Alberty, Thomas, Dipl.-Ing., 71522 Backnang (DE); Auer, Erich, Dr.-Ing., 74354 Besigheim (DE); Bodenschatz, Wolfgang, Dr.rer.nat., 71522 Backnang (DE); Schneider, Klaus, Dipl.-Ing., 71636 Ludwigsburg (DE)
(74) Vertreter: Manitz, Finsterwald & Partner GbR

(56) Entgegenhaltungen:
- EP-A1- 0 562 422
- US-A- 5 233 630

## Beschreibung

Die Erfindung betrifft ein Verfahren zur Auflösung der Phasenvieldeutigkeit bei trelliscodierter MPSK-Modulation.

### Stand der Technik

Bei Satellitenübertragungssystemen wird als Modulationsverfahren weitgehend die MPSK-Modulation verwendet. Hierbei ist die zu übertragende Information durch die Phasenlage des Trägers codiert. Störungen auf der Übertragungsstrecke beeinflussen die Phasenlage des Trägers und verfälschen damit die zu übertragende Information. Um die Bitfehlerwahrscheinlichkeit zu senken, wird vor der Modulation Redundanz hinzugefügt, die nach der Demodulation wieder eliminiert und zur automatischen Fehlerkorrektur verwendet wird. Die Redundanz führt zu einer Erhöhung der Datenrate und damit der Bandbreite.

In der Vergangenheit wurden weitgehend niederstufige BPSK- und QPSK-Verfahren für die Satellitenkommunikation verwendet. Zunehmende Forderungen nach bandbreiteneffizienter Übertragung können durch höherstufige Modulationsverfahren erfüllt werden. Dabei ist jedoch zu beachten, daß durch die Erhöhung der Signalpunkte im Phasenkreis eine größere Empfindlichkeit gegenüber Störungen hervorgerufen wird, da der Abstand benachbarter Phasenpunkte reduziert wird.

Der klassische Ansatz Codierung und Modulation zu trennen, wird bei der codierten Modulation durch Verschmelzen von Kanalcodierung und Modulation ersetzt. Im Gegensatz zur normalen Fehlerkorrektur, bei der Redundanz zu einer Erhöhung der Datenrate und damit der Bandbreite führt, wird bei der codierten Modulation die Zahl der Signalpunkte erhöht und damit eine effizientere Nutzung der Bandbreite ermöglicht. Alternativ kann bei Beibehaltung der Symbolrate auf dem Kanal die Sendeleistung reduziert oder die Antennengröße verkleinert werden.

Bei der MPSK-Übertragung muß der Empfänger M verschiedene Phasenlagen unterscheiden. Da er keine Referenzphase mit übertragen bekommt, und er bei transparenter Übertragung keinerlei Kenntnis über den zu empfangenden Datenstrom und damit über die Referenzphase erhält, müssen für die Auflösung der Phasenvieldeutigkeit geeignete Mittel vorgesehen sein.

Bei der QPSK-Übertragung wird für die Auflösung der Phasenvieldeutigkeit die innere Faltungscodierung verwendet. Ein Phasenfehler von 180° entspricht beim verwendeten QPSK-Signalmapping einer Dateninversion der I- und Q-Datenströme, die nach der Decodierung dann einen invertierten Bitstrom generieren. Dieser kann durch Verwendung einer Differenzcodierung eliminiert werden und es wird eine Transparenz gegenüber einem Phasenfehler von 180° erreicht. Bei einem Fehlerfehler von 90° bzw. 270° wird der vom Faltungsdecoder generierte Datenstrom nicht in den Coderaum des Faltungscodes fallen und damit zu einer Erhöhung der Normalisierungsrate führen. Die Beobachtung der Normalisierungsrate führt somit zu der Erkenntnis, daß Phasenfehler von 90° bzw. 270° vorliegen. In diesem Fall sorgt eine interne "Rotationslogik" für eine Korrektur der Phasenlage, indem die Phase um 90° weitergeschaltet wird. Die dann erreichenbaren Phasenfehler von 180° bzw. 0° sind aber - wie oben ausgeführt - auflösbar. Zu beachten ist hierbei, daß der Phasenfehler von 180° die Codevorschrift nicht verletzt und somit nicht über die Beobachtung der Normalisierungsrate korrigiert werden kann, sondern nur über die Differenzcodierstufe eliminiert wird.

Für die Auflösung der Phasenmehrdeutigkeit bei der 8-PSK-Übertragung kann eine sogenannte pragmatische Codierung vorgesehen werden, welche für die Auflösung der Phasenvieldeutigkeit ebenfalls die innere Faltungscodierung verwendet (IEEE-Communications Magazine, Juli 1989, Seiten 11 bis 19; US 5,233,630).

Phasenfehler von 90°, 180° und 270° werden dabei mittels einer sogenannten PAR-Codierung aufgelöst. Hierbei werden zwei Differenzcodierer wechselseitig umgeschaltet. Dadurch entsteht eine völlige Transparenz gegenüber den genannten Phasenfehlern. Die verbleibenden Phasenfehler von 45°, 135°, 225° und 315° führen dazu, daß der vom Trellis-Decoder generierte Datenstrom nicht in den Coderaum des Faltungscodes fällt und damit zu einer Erhöhung der Normalisierungsrate führt. Die Beobachtung der Normalisierungsrate führt somit zu der Erkenntnis, daß genannte Phasenfehler vorliegen. In diesem Fall sorgt eine interne "Rotationslogik" für eine Korrektur der Phasenlage, indem die Phase um 45° weitergeschaltet wird. Die dann erreichbaren Phasenfehler von 90°, 180°, 270° bzw. 0° sind aber - wie oben ausgeführt - auflösbar.

Nachteil der PAR-Codierung ist eine Fehlervervielfachung. Wird jedoch auf die PAR-Codierung verzichtet, so fallen die Phasenfehler von 90°, 180° und 270° in den Coderaum des pragmatischen Decoders, führen damit nicht zu einem Anstieg der Normalisierungsrate und bleiben damit unerkannt. Die Erkennung des Phasenfehlers von 180° könnte durch eine Differenzcodierstufe beim uncodierten Bit ausgeglichen werden. Phasenfehler von 90° und 270° bleiben jedoch seitens des pragmatischen Decoders weiterhin unerkannt.

Bei einem aus der EP-A-0 562 422 bekannten Kommunikationssystem mit trelliscodierter MQAM-Modulation und jeweils einer Decodierstufe für die innere und die äußere Decodierung werden Daten entsprechend unterschiedlicher QAM-Modi wie insbesondere dem 16-QAM-, 32-QAM- und 64-QAM-Modus übertragen. Ein Empfänger erfasst den jeweiligen QAM-Modus der übertragenen Daten nach der Versuchs- und Irrtums-Methode, indem versucht wird, die empfangenen Daten unter Verwendung unterschiedlicher QAM-Modi und einer Rotation des Eingangssignals um 90° zu decodieren, bis bestimmte Synchronisationskriterien erfüllt sind, mit denen dann auch sichergestellt ist, dass der Decoder den korrekten QAM-Modus verwendet und gegebenenfalls mit der 90°-Rotation gleichzeitig auch eine erforderliche Phasenkorrektur zur Auflösung einer Phasenvieldeutigkeit erfolgt ist. Dabei muss zur Erfüllung eines ersten Synchronisationskriteriums die vom inneren Trellis-Decoder bzw. Viterbi-Decoder überwachte Renormalisierungsrate unter einen vorgegebenen Schwellwert fallen, was im Fall eines Phasenfehlers von 90° nur dann möglich ist, wenn auch die entsprechende Phasenkorrektur vorgenommen wurde. Die nach dem Prinzip Versuch und Irrtum durchzuführende Weiterschaltung von einem QAM-Modus zum anderen und 90°-Rotation wird über einen Sequenzer der betreffenden Synchronisationserfassungsschaltung bewerkstelligt, bis der innere Decoder signalisiert, dass die gewünschte Synchronisation erreicht ist. Ob am Ende tatsächlich eine 90°-Rotation vorgenommen wird oder nicht, wird also ausschließlich durch den inneren Decoder bestimmt. Die 90°-Rotation erfolgt also in Kombination mit der QAM-Modus-Weiterschaltung nach der Versuchs- und Irrtums-Methode, wobei letztlich durch den inneren Decoder entschieden wird, ob die 90°-Rotation beizubehalten ist oder nicht, so dass für die Auflösung der betreffenden Phasenvieldeutigkeit ausschließlich dieser innere Decoder herangezogen wird.

### Vorteile der Erfindung

Mit den Maßnahmen gemäß Anspruch 1 lassen sich Phasenvieldeutigkeiten bei trelliscodierten MPSK-Modulationssignalen auf sehr einfache Weise und ohne großen Zusatzaufwand, insbesondere bei höherstufigen Modulationsverfahren, korrigieren. Die Unteransprüche zeigen vorteilhafte Weiterbildungen des Verfahrens auf.

Höherstufige Modulationsverfahren besitzen aufgrund der erhöhten Anzahl der Signalpunkte eine größere Empfindlichkeit gegenüber Störungen. Deshalb wird bei Systemen mit 8 PSK und noch höherstufigen Modulationsverfahren wie z.B. 16-PSK-Modulation die innere Codierung mit einer äußeren, z.B. einer Reed-Solomon-Codierung umgeben. Mit dieser verketteten Codierung wird trotz erhöhter Fehleranfälligkeit im Kanal eine ausgezeichnete Performance erzielt.

Unter der Voraussetzung, daß die äußere Decoderstufe (RS-Codec) immer zugeschaltet ist, kann diese für die Auflösung der Phasenvieldeutigkeit mitbenutzt werden. Immer dann, wenn der Trellis-Decoder (ohne PAR-Codierung) unentdeckte falsche Phasenlagen weitergibt, also bei Phasenfehlern von 90°, 180° und 270°, wird die Nichtkorrigierbarkeit z.B. der RS-Wörter schlagartig zunehmen. Dies kann als ein weiteres Kriterium zur Auflösung der Phasenvieldeutigkeit herangezogen werden und als ein Triggersignal für eine Phasenkorrektur, d.h. ein Weiterschalten der Phase herangezogen werden.

Der Erfindung liegt die Aufgabe zugrunde, ein verbessertes Verfahren der eingangs genannten Art zu schaffen.

Erfindungsgemäß wird diese Aufgabe gelöst durch ein Verfahren mit den im Anspruch 1 angegebenen Merkmalen.

Als äußere Codierung, von der ein Phasenkorrektursignal abgeleitet werden kann, eignet sich auch ein Rahmendecoder. Da eine äußere Codierung, z.B. eine Reed-Solomon-Codierung, insbesondere bei höherstufigen Modulationsverfahren sowieso vorgesehen ist, bedeutet die Phasenkorrektur über die Auswertung der äußeren Decodierung nur einen sehr geringen Aufwand im Gegensatz zur Decodierung gemäß US 5,233,630. Ein weiterer Vorteil liegt in der BER (Bit Error Rate) -Verbesserung. Das Verfahren läßt sich auf beliebige MPSK-Modulationssignale ohne Änderung der Hardware anwenden. Es müssen lediglich geänderte Phasenwerte abgespeichert werden und bei der Phasenweiterschaltung angewählt werden.

### Zeichnungen

Anhand der Zeichnungen werden Ausführungsbeispiele der Erfindung näher erläutert. Es zeigen
Figur 1 ein Blockschaltbild eines Modulators zur Aufbereitung trelliscodierter MPSK-Modulationssignale,
Figur 2 ein Blockschaltbild eines Demodulators zur Aufbereitung trelliscodierter MPSK-Demodulationssignale,
Figur 3 die IQ-Ebene mit den Phasenzuständen für 8 PSK,
Figur 4 ein RAM-Speicher zur Realisierung einer Rotationslogik und
   Tabelle 1 die möglichen Phasenfehler und ihre Korrektur bei 8-PSK-Modulation.

### Beschreibung der Erfindung

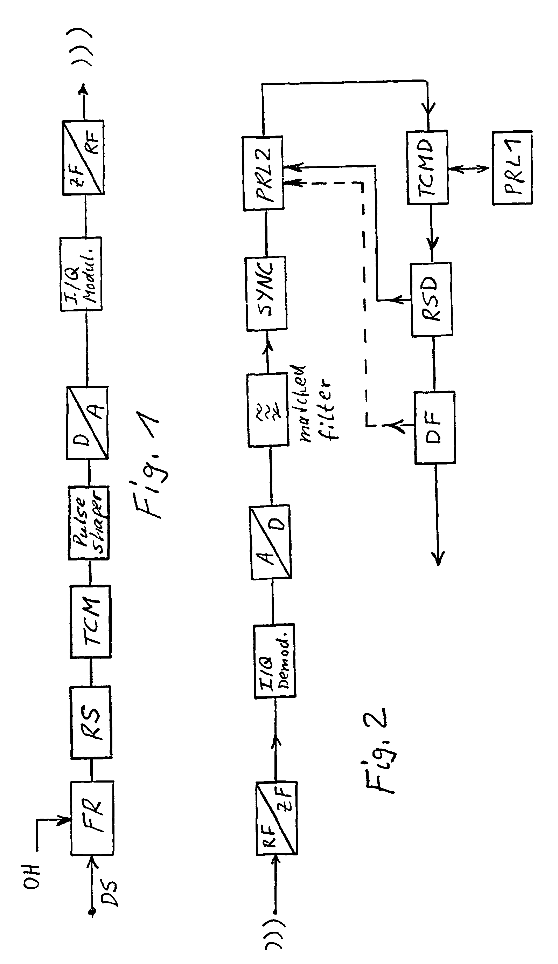

Im Blockschaltbild nach Figur 1 ist das Prinzip der Aufbereitung trelliscodierter MPSK-Modulationssignale dargestellt. Der aufzubereitende digitale Datenstrom DS wird einer "Framing"-Einheit FR zugeführt, die den Datenstrom zusammen mit einem Overhead OH für Kennungs- und Synchronisationszwecke in einen Übertragungsrahmen einbindet. An die Framing-Einheit FR schließt sich ein Reed-Solomon-Coder RS an, auf den die Faltungsencoderstufe TCM (trellis coded modulation) folgt. Ein nachgeschalteter Pulsshaper, ein D/A-Wandler und ein I/Q-Modulator liefert den aufbereiteten trelliscodierten Datenstrom in ZF-Lage. Zur Übertragung wird dieser Datenstrom noch in die Radiofrequenzlage RF umgesetzt.

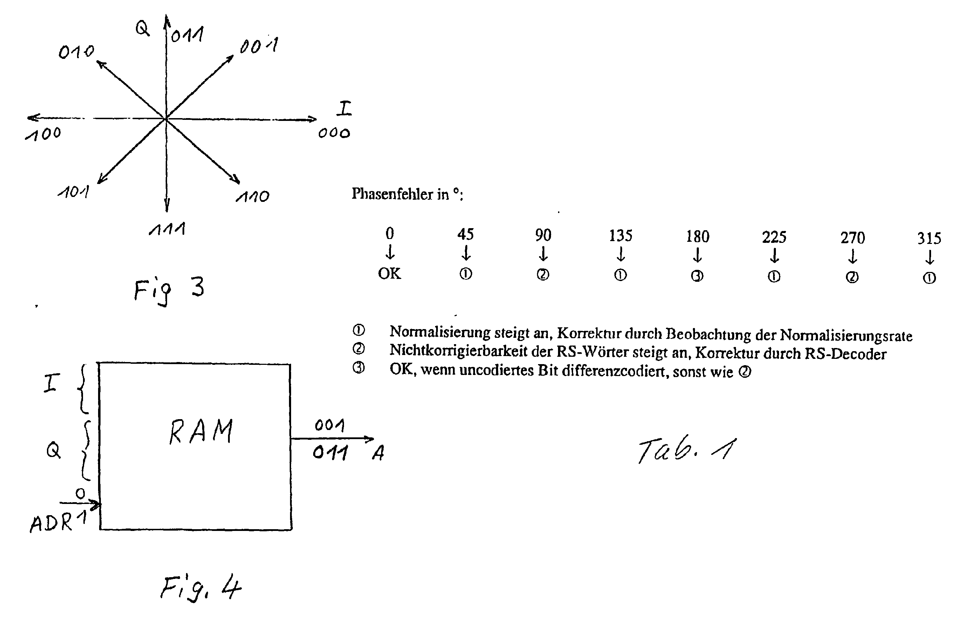

Die übertragenen trelliscodierten MPSK-Modulationssignale werden einem Demodulator gemäß Figur 2 zugeführt. Analog zur senderseitigen Aufbereitung erfolgt zuerst eine Abmischung in die ZF-Lage, eine Demodulation der I- und Q-Datenströme, eine A/D-Wandlung, eine Filterung (matched filter), eine Synchronisation (SYNC) und eine Demodulation mittels der Trellis-Decoderstufe TCMD. An diese schließt sich der Reed-Solomon-Decoder RSD und eine "Deframing"-Einheit DF an. Der Decoderstufe TCMD ist eine Phasenrotationslogik PRL1 zugeordnet. Phasenvieldeutigkeiten einer ersten Art - wie zuvor geschildert - Phasenfehler von beispielsweise 45°, 135°, 225° und 315° können von der konventionell aufgebauten Decoderstufe TCMD erkannt werden. Als Fehlerkriterium dient beispielsweise der Anstieg der Normalisierungsrate. In diesem Fall sorgt die Phasenrotationslogik PRL1 für die Weiterschaltung um jeweils einen vorgegebenen zweiten Phasenwert, bei 8-PSK-Modulation um 45° und bewirkt damit eine Phasenkorrektur. Die nicht erkannten Phasenfehler von beispielsweise 90°, 180° und 270°, die von der Decoderstufe TCMD nicht erkannt werden können - für diese Phasenfehler ist die Decodertufe TCMD transparent - werden erfindungsgemäß von einer Decoderstufe für die äußere Decodierung, z.B. einem Reed-Solomon-Decoder RSD detektiert und zu einem Phasenkorrektursignal verarbeitet. Zur Aufbereitung dieses Phasenkorrektursignals kann die Beobachtung des Reed-Solomon-Decoders RSD dienen: Nichtkorrigierbarkeit der RS-Wörter steigt schlagartig an, z.B. von 2 Promille auf 30%. Das so gewonnene Phasenkorrektursignal wird erfindungsgemäß einer dem Decoder TCMD vorgeschalteten Phasenrotationslogik PRL2 zugeführt, die eine Weiterschaltung der Phasenwerte um jeweils einen vorgegebenen zweiten Wert bei Auftreten des Phasenkorrektursignals vornimmt. Im Falle einer 8-PSK-Übertragung wird um jeweils 90° weitergeschaltet (Drehen des Phasenstands in der IQ-Ebene um jeweils 90° gemäß Figur 3).

Die Tabelle 1 gibt die möglichen Phasenfehler und ihre Korrektur für 8-PSK-Modulation wieder.

Anstelle des Reed-Solomon-Decoders RSD kann auch die "Deframing"-Einheit (Rahmendecoder) DF zur Phasenkorrektur der zweiten Art von Phasenvieldeutigkeit herangezogen werden. Ein Phasenkorrektursignal wird dann aufbereitet, wenn durch die "Deframing"-Einheit kein Rahmen auffindbar ist.

Für die Auflösung der Phasenmehrdeutigkeit kann auch die Decoderstufe für die äußere Decodierung allein benutzt werden.

Zur Realisierung der Phasenrotationslogik PRL1 bzw. PRL2 kann ein einfacher RAM-Speicher (Figur 4) herangezogen werden, dem die I- und Q-Datenströme parallel zugeführt werden. Je nach Adreßsteuerung an seinem Adreßeingang ADR erscheint am Ausgang A eine Bitkombination (Figur 3), die den unveränderten Phasenwerten oder den - bei 8 PSK um 90° - gedrehten Phasenzuständen entspricht. Nimmt beispielsweise das Adreßsteuersignal den Wert 0 an - keine Phasenkorrektur erforderlich - wird vom RAM-Speicher am Ausgang A die Bitfolge 001 ausgegeben. Nimmt das Adreßsteuersignal den Wert 1 an - Phasenweiterschaltung um 90° - liefert der Speicher gemäß Figur 3 am Ausgang A die Bitfolge 011. Folglich gehören zu den I- und Q-Daten jeweils zwei abgespeicherte Bitkombinationen je nachdem, ob die Phase gedreht werden soll oder nicht.

Die Vorgehensweise der Erfindung ist natürlich auch auf andere MPSK-Modulationverfahren mit geänderten Phasenwerten übertragbar, z.B. auf M=16: 16-PSK-Modulation. Der Speicher muß hierzu lediglich so umprogrammiert werden, daß die entsprechend geänderten Phasenwerte die zugehörigen Bitfolgen am Ausgang A liefern.

Die Phasenrotationslogik PRL1 kann entsprechend der behandelten Phasenrotationslogik PRL2 ausgestaltet sein oder bereits hardwaremäßig mit den entsprechenden Verknüpfungen im Decoder TCMD integriert sein.

Bei der Erfindung wird die Auflösung der Phasenvieldeutigkeit also insbesondere vom pragmatischen Trellis-Decoder und dem RS-Decoder bzw. der "Deframing" -Einheit gemeinsam erledigt. Eine PAR-Codierung gemäß IEEE-Communications Magazine oder der US 5,233,630 ist nicht notwendig. Je nach Anwendung kann die Auflösung der Phasenmehrdeutigkeit anhand der Detektion in der Decoderstufe für die äußere Decodierung (RS-Decoder, Deframing-Einheit) genügen.

Für insbesondere 8-PSK-Modulation ergeben sich folgende Systemvoraussetzungen:
a) die Phasenrotationslogik muß in der inneren Decodierstufe um jeweils 45° weitergeschaltet werden können,
b) die Phasenrotationslogik muß vor der inneren Decodierstufe um jeweils 90° weitergeschaltet werden können,
c) die Rotationsmöglichkeiten vor und im pragmatischen Trellis-Decoder müssen zeitlich zueinander abgestimmt sein.

Allgemein gilt für m-PSK-Modulation, daß die der Trellis-Decoderstufe zugeordnete phasenrotationslogik eine weiterschaltung der Phasenwerte um jeweils 360°/m vornimmt und die der äußeren Decoderstufe zugeordnete Phasenrotationslogik eine Weiterschaltung um jeweils 720°/m.

## Patentansprüche

1. Verfahren zur Auflösung der Phasenvieldeutigkeit bei trelliscodierten m-PSK-Modulationssignalen, m=8, 16, ..., mit jeweils einer Decoderstufe (TCMD; RSD, DF) für eine innere und äußere Decodierung, wobei die innere Decodierung eine Trellis-Decoderstufe (TCMD) aufweist, der eine Phasenrotationslogik (PRL1) zugeordnet ist, unter Anwendung folgender Schritte:
- für die Auflösung der Phasenvieldeutigkeit wird die Trellis-Decoderstufe (TCMD) herangezogen, **gekennzeichnet dadurch, dass** auch die Decoderstufe (RSD,DF) für die äußere Decodierung herangezogen wird und in Abhängigkeit der detektierten Phasenvieldeutigkeit ein Phasenkorrektursignal erzeugt wird, das einer der Trellis-Decoderstufe (TCMD) vorgeschalteten Phasenrotationslogik (PRL2) zugeführt wird.

2. Verfahren nach Anspruch 1, **gekennzeichnet durch** folgende Schritte:
- eine erste Art der Phasenvieldeutigkeit wird **durch** die innere Trellis-Decoderstufe (TCMD) anhand eines Fehlerkriteriums, insbesondere einem Anstieg der Normalisierungsrate, korrigiert,
- eine zweite Art der Phasenvieldeutigkeit, die von der inneren Trellis-Decoderstufe (TCMD) nicht korrigierbar ist, wird in der Decoderstufe (RSD, DF) für die äußere Decodierung detektiert und zu einem Phasenkorrektursignal verarbeitet.

3. Verfahren nach Anspruch 1 oder 2, **dadurch gekennzeichnet, daß** in Abhängigkeit des Auftretens des Phasenkorrektursignals das Modulationssignal um einen vorgegebenen Phasenwert weitergeschaltet wird.

4. Verfahren nach einem der Ansprüche 1 bis 3, **dadurch gekennzeichnet, daß** als Decoderstufe (RSD) für die äußere Decodierung zur Detektion der Phasenvieldeutigkeit ein Reed-Solomon-Decoder verwendet wird.

5. Verfahren nach einem der Ansprüche 1 bis 4, **dadurch gekennzeichnet, daß** als Decoderstufe (DF) für die äußere Decodierung zur Detektion der Phasenvieldeutigkeit ein Rahmendecoder verwendet wird.

6. Verfahren nach einem der Ansprüche 2 bis 5, **dadurch gekennzeichnet, daß** im Falle von m-PSK-Modulationssignalen, wobei m gleich 8,16 ...,ist, bei Detektion der ersten Art von Phasenvieldeutigkeit die der Trellis-Decoderstufe (TCMD) zugeordnete Phasenrotationslogik (PRL1) eine Weiterschaltung der Phasenwerte um jeweils 360°/m vornimmt und bei Detektion der zweiten Art von Phasenvieldeutigkeit die der Trellis-Decoderstufe (TCM) vorgeschaltete Phasenrotationslogik (PRL2) eine Weiterschaltung der Phasenwerte um jeweils 720°/m vornimmt.

7. Verfahren nach einem der Ansprüche 1 bis 6, **dadurch gekennzeichnet, daß** die Weiterschaltung der Phasenwerte über Speicher vorgenommen wird, die über eine Adreßsteuerung in Abhängigkeit der detektierten Phasenkorrektursignale jene Signale auslesen, die den um die jeweils vorgegebenen Phasenwerte gedrehten Signalen entsprechen.

## Claims

1. A method for the resolution of the phase ambiguity in trellis-coded m-PSK modulation signals, m = 8, 16, ..., each having a decoder stage (TCMD; RSD, DF) for an internal and external decoding, wherein the internal decoding has a trellis decoder stage (TCMD) with which a phase rotation logic (PRL1) is associated, using the following steps:
- the trellis decoder stage (TCMD) is used for the resolution of the phase ambiguity, **characterised in that** the decoder stage (RDS, DF) is also used for the external decoding and a phase correction signal is generated in dependence on the detected phase ambiguity and is supplied to a phase rotation logic (PRL2) connected upstream of the trellis decoder stage (TCMD).

2. A method in accordance with claim 1, **characterized by** the following steps:
- a first kind of phase ambiguity is corrected by the internal trellis decoder stage (TCMD) with reference to an error criterion, in particular to an increase in the normalization rate;
- a second kind of phase ambiguity, which cannot be corrected by the internal trellis decoder stage (TCMD), is detected in the decoder stage (RSD, DF) for the external decoding and is processed to a phase correction signal.

3. A method in accordance with claim 1 or claim 2, **characterized in that** the modulation signal is switched further by a predetermined phase value in dependence on the occurrence of the phase correction signal.

4. A method in accordance with any one of the claims 1 to 3, **characterized in that** a Reed-Solomon decoder is used as the decoder stage (RSD) for the external decoding for the detection of the phase ambiguity.

5. A method in accordance with any one of the claims 1 to 4, **characterized in that** a frame decoder is used as the decoder stage (DF) for the external decoding for the detection of the phase ambiguity.

6. A method in accordance with any one of the claims 2 to 5, **characterized in that**, in the case of m PSK modulation signals, where m is equal to 8, 16..., on the detection of the first kind of phase ambiguity, the phase rotation logic (PRL1) associated with the trellis decoder stage (TCMD) carries out a further switching of the phase values by 360°/m in each case and, on detection of the second kind of phase ambiguity, the phase rotation logic (PRL2) connected before the trellis decoder stage (TCM) carries out a further switching of the phase values by 720°/m in each case.

7. A method in accordance with any one of the claims 1 to 6, **characterized in that** the further switching of the phase values is carried out via memories which read out those signals which correspond to the signals rotated by the respective predetermined phase values via an address control in dependence on the detected phase correction signals.

## Revendications

1. Procédé pour lever l'ambiguïté de phase dans des signaux de modulation m-PSK codés en treillis, avec m = 8, 16, ..., comprenant respectivement un étage de décodage (TCMD ; RSD, DF) pour un décodage intérieur et extérieur, dans lesquels le décodage intérieur comprend un étage de décodage de treillis (TCMD) auquel est associée une unité logique de rotation de phase (PRL1), en appliquant les étapes suivantes :
- pour lever l'ambiguïté de phase, on utilise l'étage de décodage de treillis (TCMD), **caractérisé en ce que** l'on utilise aussi l'étage de décodage (RSD, DF) pour le décodage extérieur, et en fonction de l'ambiguïté de phase détectée, on engendre un signal de correction de phase, qui est amené à une unité logique de rotation de phase (PRL2) branchée avant l'étage de décodage de treillis (TCMD).

2. Procédé selon la revendication 1, **caractérisé par** les étapes suivantes:
- un premier type d'ambiguïté de phase est corrigé au moyen de l'étage de décodage de treillis intérieur (TCMD) à l'aide d'un critère d'erreur, par exemple une augmentation du taux de normalisation,
- un second type d'ambiguïté de phase, qui ne peut pas être corrigé par l'étage de décodage de treillis intérieur (TCMD), est détecté dans l'étage de décodage (RSD, DF) pour le décodage extérieur, et traité pour former un signal de correction de phase.

3. Procédé selon la revendication 1 ou 2, **caractérisé en ce que**, en fonction de l'apparition du signal de correction de phase, le signal de modulation est commuté plus loin à raison d'une valeur de phase prédéterminée.

4. Procédé selon l'une des revendications 1 à 3, **caractérisé en ce que** l'on utilise, à titre d'étage de décodage (RSD) pour le décodage extérieur destiné à la détection de l'ambiguïté de phase, un décodeur de type Reed-Solomon.

5. Procédé selon l'une des revendications 1 à 4, **caractérisé en ce que** l'on utilise, à titre d'étage de décodage (DF) pour le décodage extérieur destiné à la détection de l'ambiguïté de phase, un décodeur de cadre.

6. Procédé selon l'une des revendications 2 à 5, **caractérisé en ce que**, dans le cas de signaux de modulation m-PSK, dans lesquels m est égal à 8, 16, ..., lors de la détection du premier type d'ambiguïté de phase, l'unité logique de rotation de phase (PRL1) associée à l'étage de décodage de treillis (TCMD) exécute une commutation des valeurs de phase à raison de 360°/m, et lors de la détection du second type d'ambiguïté de phase, l'unité logique de rotation de phase (PRL2) branchée en amont de l'étage de décodage de treillis (TCM) exécute une commutation des valeurs de phase respectivement à raison de 720°/m.

7. Procédé selon l'une des revendications 1 à 6, **caractérisé en ce que** la commutation des valeurs de phase est exécutée au moyen de mémoires qui lisent, via une commande d'adressage en fonction des signaux de correction de phase détectés, ceux des signaux qui correspondent aux signaux tournées des valeurs de phase prédéterminées respectives.
